# EUROPÄISCHE PATENTANMELDUNG

(11) **EP 1 364 714 A1**
(43) Veröffentlichungstag der Anmeldung: **26.11.2003**
(21) Anmeldenummer: 03007088.2
(22) Anmeldetag: 28.03.2003
(51) Int. Cl.: B02C 21/02, B07B 1/00, B65G 41/00

(54) **Vorrichtung zum Sieben, Sortieren oder Zerkleinern von schüttfähigen Gütern**

(30) Priorität: 13.05.2002 DE 10221253
(71) Anmelder: Backers Maschinenbau GmbH, 49767 Twist (DE)
(72) Erfinder: Backers, Heinz, 49767 Twist (DE)
(74) Vertreter: Heiland, Karsten, Dipl.-Ing.

(57) **Zusammenfassung**

Die Erfindung betrifft eine Vorrichtung zum Sieben, Sortieren oder Zerkleinern von schüttfähigen Gütern, mit einem Raupenfahrwerk (10) und einer auf dem Raupenfahrwerk angeordneten Arbeitseinheit (13), insbesondere einem Steigförderer (14) mit Siebaggregat (16). Erfindungsgemäß ist die Arbeitseinheit (13) in ihrer Neigung relativ zum Raupenfahrwerk (10) in beliebige Richtungen verstellbar.

## Beschreibung

Die Erfindung betrifft eine Vorrichtung zum Sieben, Sortieren oder Zerkleinern von schüttfähigen Gütern, mit einem Raupenfahrwerk und einer auf dem Raupenfahrwerk angeordneten Arbeitseinheit, insbesondere einem Steigförderer mit nachgeordnetem Arbeitsgerät.

Siebe für die Sortierung von Böden, Abraum, Schutt oder dergleichen, insbesondere Sternsiebe oder Scheibensiebe, können im Anschluss an einen Steigförderer auf einem Fahrgestell eines Anhängers angeordnet und so an den gewünschten Siebungsort bewegbar sein. Das Fahrgestell kann ein Raupenfahrwerk aufweisen. Dieses kann selbstfahrend oder als Anhänger vorgesehen sein.

Ein Problem ist die Ausrichtung des Steigförderers bzw. des Arbeitsgeräts relativ zum Untergrund. Für die bestmögliche Wirkungsweise ist eine horizontale Ausrichtung - abgesehen von einer gewünschten positiven oder negativen Steigung - angestrebt. Es muss deshalb der Untergrund für die Vorrichtung entsprechend eben sein. Die Einsatzmöglichkeiten der Vorrichtung sind dadurch begrenzt.

Mit der erfindungsgemäßen Vorrichtung sollen die Einsatzmöglichkeiten erweitert werden. Erfindungsgemäß ist die Vorrichtung dadurch gekennzeichnet, dass die Arbeitseinheit in ihrer Neigung relativ zum Raupenfahrwerk verstellbar ist. Je nach Neigung des Raupenfahrwerks kann die Position der Arbeitseinheit bzw. des Steigförderers und des Arbeitsgerätes angepasst werden.

Vorteilhafterweise ist der Steigförderer in seiner Neigung quer zu seiner Förderrichtung verstellbar. Durch diese Art der Verstellung können bei geneigtem Untergrund randseitige Materialanhäufungen auf dem Steigförderer vermieden werden.

Besonders vorteilhaft ist eine Ausführung, bei der die Neigung der Arbeitseinheit bzw. des Steigförderers relativ zum Raupenfahrwerk in beliebige Richtungen verstellbar ist. Jegliche Bodenunebenheiten können dadurch ausgeglichen werden.

Die Möglichkeit der Neigungsverstellung bzw. -anpassung ist außerdem zur Vergrößerung der Abgabehöhe des Steigförderers nutzbar. Weitere Verwendungen und Einsatzmöglichkeiten können dadurch erschlossen werden.

Erfindungsgemäß kann der Steigförderer bzw. die Arbeitseinheit an einem Rahmen gehalten sein, der in seiner Neigung relativ zum Raupenfahrwerk verstellbar ist. Auch bei dieser Ausführungsform kann eine Neigung in alle Richtungen möglich sein.

Vorzugsweise ist das Arbeitsgerät an einem Rahmen gehalten, der auch den Steigförderer hält. Das Arbeitsgerät ist dann zusammen mit dem Steigförderer in der Neigung relativ zum Raupenfahrwerk verstellbar.

Als Arbeitsgerät ist insbesondere ein Sieb vorgesehen, etwa ein angetriebenes Scheibenoder Sternsieb. Beispiele für zerkleinernde Arbeitsgeräte sind Brecher, Mühlen oder Schredder.
Vorteilhafterweise ist dem Schrägförderer ein Bunker vorgeordnet. Dieser dient der Aufnahme der schüttfähigen Güter und der Abgabe derselben an den Steigförderer. Vorzugsweise weist der Bunker ein eigenes Förderband, nämlich ein Bunkerband auf. Insbesondere ist der Bunker mit dem Steigförderer in einem gemeinsamen Rahmen gehalten und in seiner Neigung relativ zum Raupenfahrwerk verstellbar.

Vorzugsweise ist der Rahmen zumindest auf mehreren längenveränderlichen Stellorganen gehalten, etwa auf Hydraulikzylindern, die insbesondere Zug und Druck übertragen. Die Neigungsverstellung des Rahmens ist so schnell und präzise durchführbar.

Vorteilhafterweise ist der Rahmen auf dem Raupenfahrwerk an einem Gelenk und an mehreren längenveränderlichen Stellorganen gehalten. Gelenk und Stellorgane sind insbesondere Teile einer Neigungsregeleinheit auf dem Raupenfahrwerk.

Vorzugsweise ist der Rahmen an drei Lagern gehalten. Insbesondere ist ein Lager als Gelenk mit kardanischen Eigenschaften ausgebildet und zwei Lager sind mit längenveränderlichen Stellorganen versehen. Vorzugsweise sind dabei je Lager zwei Stellorgane vorgesehen, die unter einem Winkel zueinander arbeiten, wobei die beiden Lager quer zur Längsrichtung des Steigförderers, also jeweils seitlich angeordnet sind. Das Gelenk ist hierzu mittig aber in Längsrichtung des Steigförderers versetzt (entgegen der Förderrichtung des Steigförderers) angeordnet. Die Stellorgane für die seitlichen Lager am Rahmen sind so ausgerichtet, dass auf jedes der beiden Lager Aufwärts- und Querdruck übertragbar ist.

Am Raupenfahrwerk bzw. an der zugehörigen Neigungsregeleinheit sind vorzugsweise vier Lagerpunkte vorgesehen, nämlich zwei Lagerpunkte mittig, aber in Förderrichtung versetzt, und zwei Lagerpunkte seitlich (auf jeder Seite ein Lagerpunkt), aber in Förderrichtung zwischen dem Gelenk und den zwei anderen Lagerpunkten.

Vorzugsweise ist der Rahmen auf dem Raupenfahrwerk drehbar angeordnet. Das Raupenfahrwerk weist hierzu eine Drehplatte in einem Drehlager auf, wobei die Drehplatte die Neigungsregeleinheit bzw. die Lager für das Gelenk und die Stellorgane trägt. Zweckmäßig ist eine Drehbarkeit um mindestens 90°, insbesondere etwa 135°. Erreicht wird dies vorzugsweise durch eine über Hebel übertragene Beaufschlagung durch einen Hydraulikzylinder.

Nach einem weiteren Gedanken der Erfindung ist das Arbeitsgerät in seiner Neigung relativ zum Steigförderer abwinkelbar. Vorzugsweise ist eine Bewegung bis in eine etwa vertikale Position des Arbeitsgeräts möglich. Dadurch verkürzt sich die Gesamtlänge der Vorrichtung, sodass der Transport vereinfacht wird. Auch ist in einer abgewinkelten Stellung des Arbeitsgeräts oftmals eine Reinigung desselben leichter möglich.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
- Fig. 1.: eine perspektivische Darstellung einer erfindungsgemäßen Vorrichtung,
- Fig. 2: eine Vorderansicht eines unteren Teils der Vorrichtung gemäß Fig. 1, nämlich eines Raupenfahrwerks und einer Neigungsregeleinheit,
- Fig. 3: eine Seitenansicht eines unteren Teils der Vorrichtung gemäß Fig. 1, nämlich des Raupenfahrwerks, der Neigungsregeleinheit und von Teilen eines Rahmens und eines Steigförderers,

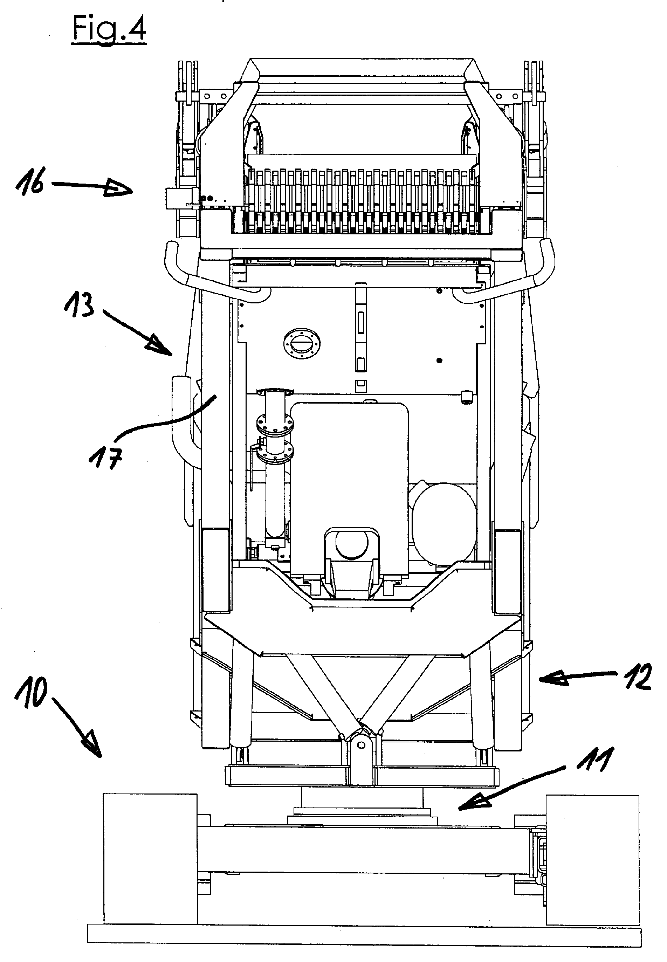

- Fig. 4: eine Vorderansicht der Vorrichtung gemäß Fig. 1,
- Fig. 5: eine perspektivische Darstellung eines Drehlagers für die Neigungsregeleinheit,
- Fig. 6.: eine vereinfachte Seitenansicht der Vorrichtung in Transportstellung,
- Fig. 7: eine Seitenansicht der Vorrichtung gemäß Fig. 6, jedoch in Arbeitsstellung und mit um 90° verdrehtem Raupenfahrwerk,
- Fig. 8: eine Draufsicht auf die Vorrichtung gemäß Fig. 7,
- Fig. 9a, 9b: eine Unteransicht des Drehlagers mit unterschiedlichen Positionen.

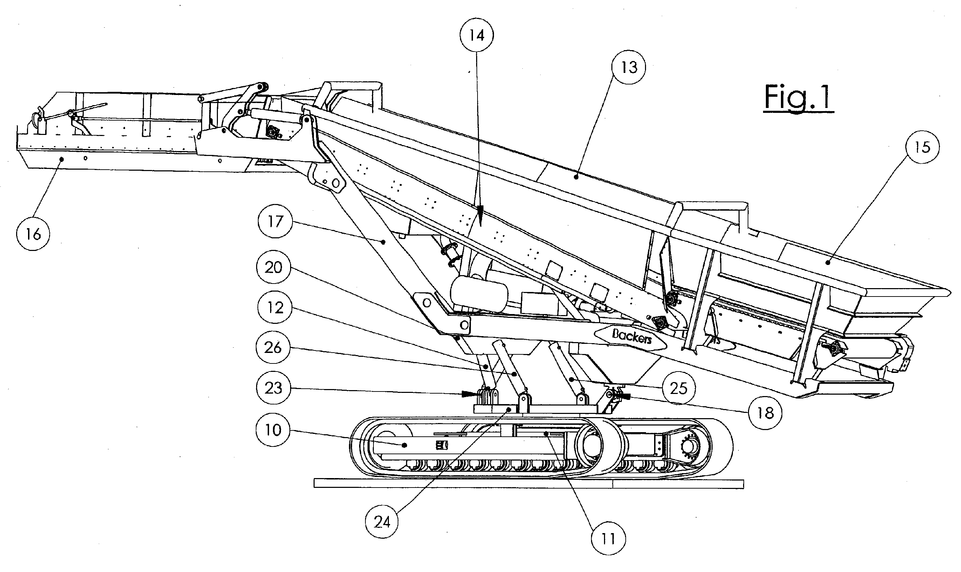

In der perspektivischen Darstellung der Fig. 1 ist eine erfindungsgemäße Vorrichtung, bestehend aus Raupenfahrwerk 10, Drehlager 11, Neigungsregeleinheit 12 und Arbeitseinheit 13, erkennbar. Die Arbeitseinheit 13 besteht hier aus einem Steigförderer 14, einem vorgeordnetem Bunker 15 und einem dem Steigförderer 14 nachgeordneten Siebaggregat 16 als Arbeitsgerät. Die genannten Teile der Arbeitseinheit 13 sind miteinander verbunden und an einem gemeinsamen Rahmen 17 gehalten.

Die Arbeitseinheit 13 ist relativ zum Raupenfahrwerk 10 verstellbar. Zum einen ist die Neigung der Arbeitseinheit 13 einstellbar und zwar beliebig in Längs- und Querrichtung des Steigförderers 14. Zum anderen ist die Arbeitseinheit 13 auf dem Raupenfahrwerk 10 drehbar.

Für die in mehrere Richtungen wirksame Neigungsverstellung ist die Arbeitseinheit 13 an mindestens 3 Punkten gelagert. Im vorliegenden Fall ist ein Lagerpunkt ein Gelenk 18, das Neigungsänderungen in beliebige Richtungen zulässt aber (naturgemäß) keine Höhenänderungen. Das Gelenk 18 ist quer zur Längsrichtung des Steigförderers 14 mittig positioniert, also entlang einer imaginären Längsmittelebene des Steigförderers 14. Zugleich ist das Gelenk 18 in Richtung auf den Bunker 15 versetzt angeordnet.

Zwei weitere Lagerpunkte 19, 20 der Arbeitseinheit 13 sind höhenveränderlich konzipiert und hierzu jeweils seitlich und auch in Längsrichtung des Steigförderers 14 mit Abstand zum Gelenk 18, d.h. in Richtung auf das Siebaggregat 16 angeordnet. An diesen Lagerpunkten 19, 20 greift jeweils ein Hydraulikzylinder 21, 22 an und führt die Last auf einen (für diese Hydraulikzylinder) gemeinsamen Lagerpunkt 23, der auf einer Drehplatte 24 des Drehlagers 11 positioniert ist. Die Drehplatte 24 trägt auch das Gelenk 18. Die beiden Hydraulikzylinder 21, 22 bilden somit ein V zwischen Arbeitseinheit 13 und Drehlager 11.

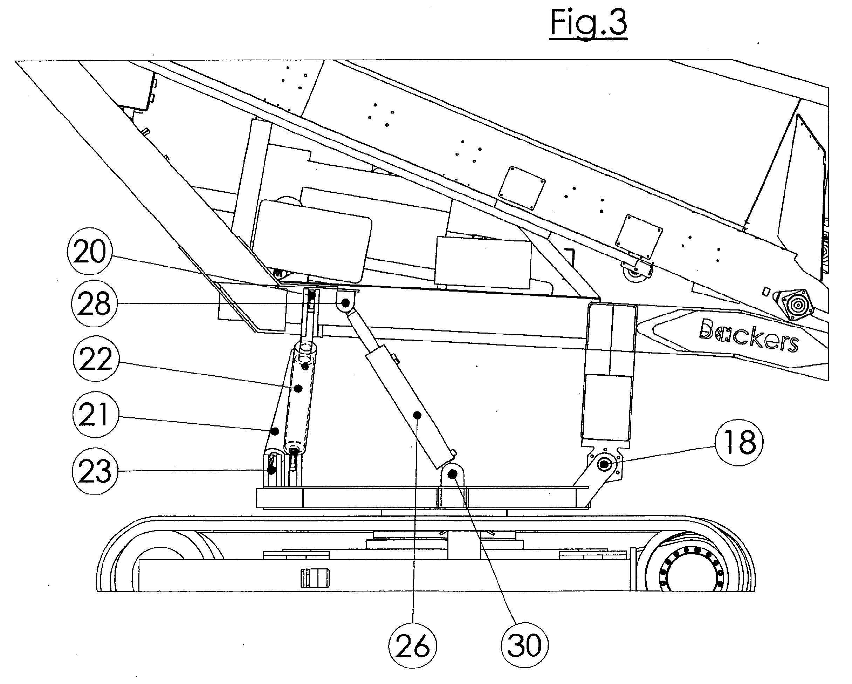

Bei der gezeigten Ausführungsform sind zwei weitere Hydraulikzylinder 25, 26 als längenveränderliche Stellorgane vorgesehen. Diese weisen obere Lagerpunkte 27, 28 und untere Lagerpunkte 29, 30 auf. Die oberen Lagerpunkte 27, 28 sind nahe den Lagerpunkten 19, 20 angeordnet und zwar mit geringem Abstand zu diesen und in Richtung auf das Gelenk 18. Die unteren Lagerpunkte 29, 30 sind ebenfalls seitlich vorgesehen aber in Längsrichtung des Steigförderers 14 etwa mittig zwischen dem Lagerpunkt 23 und dem Gelenk 18 angeordnet, siehe insbesondere Fig. 3. Die seitlichen Hydraulikzylinder 25, 26 erstrecken sich demnach schräg abwärts aber im Wesentlichen parallel zur Längsrichtung des Steigförderers 14. Insgesamt ermöglichen die Hydraulikzylinder 21, 22, 25, 26 beliebige Neigungsrichtungen der Arbeitseinheit 13 auf dem Raupenfahrwerk 10 und um das Gelenk 18. Die geometrischen Verhältnisse und die Verstellbarkeit der Hydraulikzylinder sind so eingerichtet, dass Abweichungen des Raupenfahrwerks von einer waagerechten Position um bis zu 15° oder mehr in alle Richtungen ausgeglichen werden können.

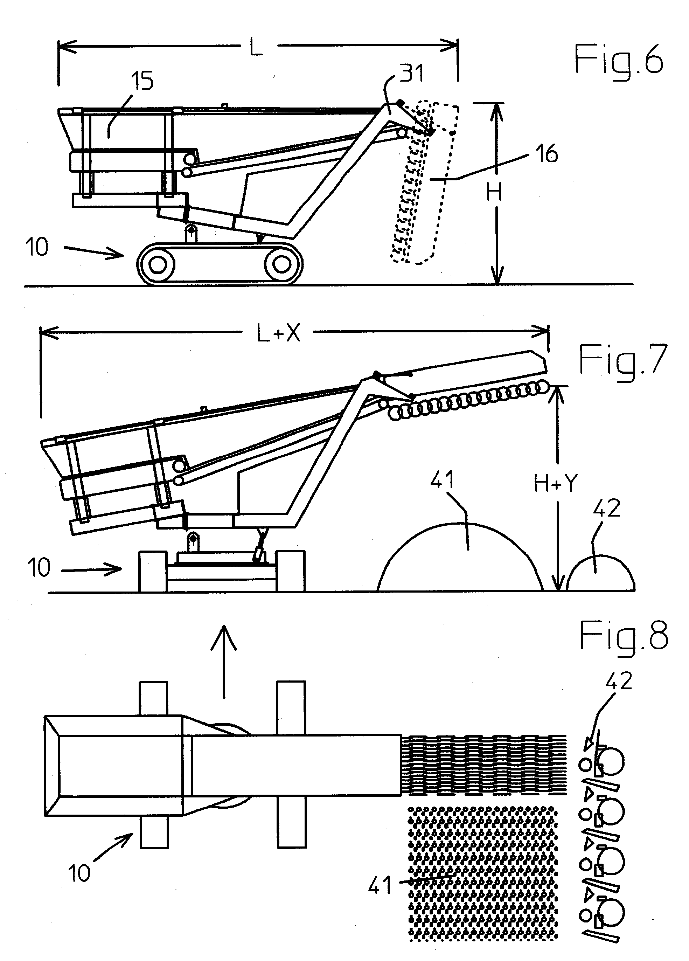

Das Siebaggregat 16 ist relativ zum Steigförderer 14 und in der imagnären Längsmittelebene desselben abwinkelbar bzw. kippbar, siehe Fig. 6. Dort nimmt das Siebaggregat 16 eine nahezu vertikale Transportposition ein. Die wirksame Länge L der Vorrichtung insgesamt ist dadurch verkürzt.

Zu der Transportposition gemäß Fig. 6 gehört auch eine Absenkung der Hydraulikzylinder, sodass ein höchster Punkt 31 der Arbeitseinheit 13 eine möglichst nur geringe Höhe H einnimmt. Erreicht wird dies durch die gezeigte Anordnung mit dem Gelenk 18 nahe dem Bunker 15.

Umgekehrt kann durch gezieltes Ausnutzen bzw. Ansteuern der Hydraulikzylinder 21, 22, 25, 26 in Verbindung mit einer waagerechten oder sogar leicht aufrechten Position des Siebaggregats 16 eine besonders große Abgabehöhe H + Y bei größerer Länge L + X erreicht werden, siehe Fig. 7. Ein besonderer Vorteil der erfindungsgemäßen Vorrichtung besteht in der Anpassbarkeit der Position der Arbeitseinheit an unebenes Gelände. Material kann vor Ort gesiebt werden. Ein Transport in ebenes Gelände ist nicht erforderlich.

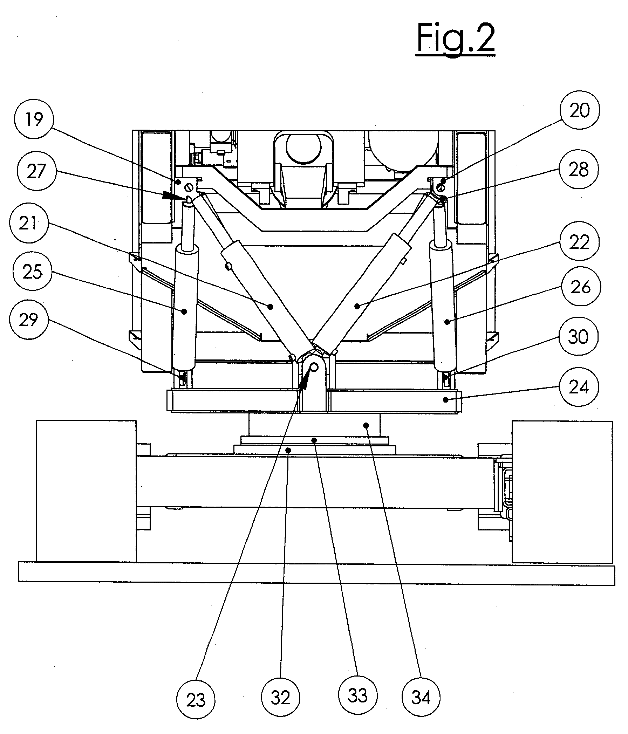

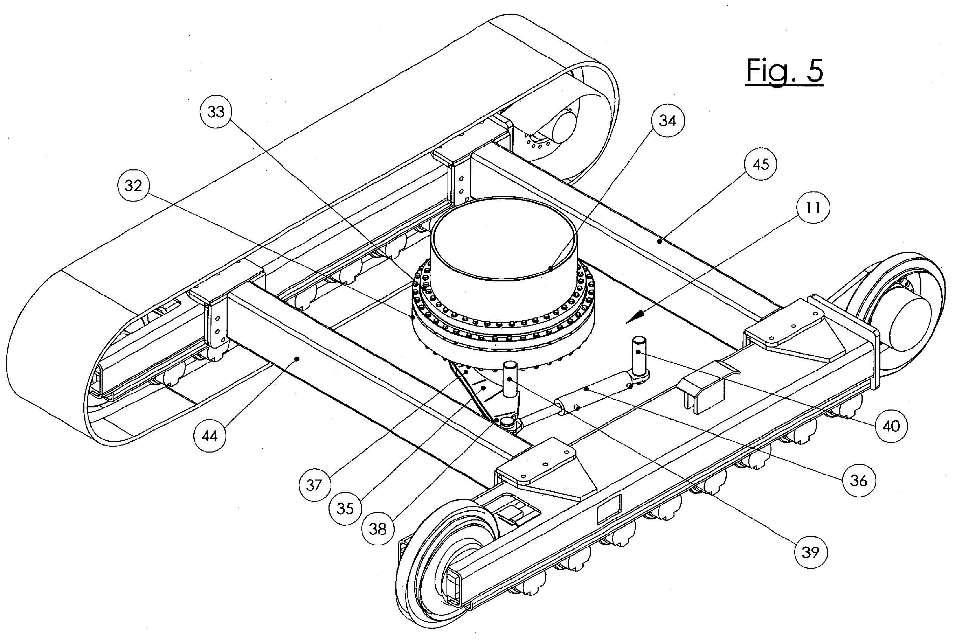

Die Arbeitseinheit 13 ist mit der Neigungsregeleinheit 12 um etwa 90° oder mehr auf dem Raupenfahrwerk 10 drehbar. Details des Drehlagers 11 sind in Fig. 5 gezeigt. Ein starrer Lagerkranz 32 ist dem Raupenfahrwerk 10 zugeordnet. Ein darin drehender Lagerring 33 trägt einen Sockel 34, auf dem die Drehplatte 24 befestigt ist, siehe Fig. 2.

Der innere Lagerring 33 ist durch einen Hebel 35, nicht gezeigte Übertragungsorgane und einen Hydraulikzylinder 36 um etwa 135° drehbar. Zur Erzielung dieser Winkelbewegung weist der Hebel 35 einen langen Arm 37 und einen kurzen Arm 38 auf, wobei der Hydraulikzylinder 36 an dem kurzen Arm 38 angreift. Der Hebel 35 schwenkt dabei um seinen Lagerpunkt 39. Entsprechend ist der Hydraulikzylinder 36 an seinem dem kurzen Arm 38 gegenüberliegenden Ende um einen Lagerpunkt 40 drehbar.

Die Fig. 7 und 8 verdeutlichen die Vorteile einer 90°-Drehung der Arbeitseinheit 13 auf dem Raupenfahrwerk 10. Die Siebung kann verbunden werden mit einer langsamen und stetigen Vorwärtsbewegung des Raupenfahrwerks 10. Dadurch bilden sich zwei Materialreihen unter dem Siebaggregat 16, nämlich eine Reihe 41 mit feinem Korn unmittelbar unter dem Siebaggregat 16 und eine Reihe 42 mit grobem ausgesiebtem Korn außerhalb der Reihe 41. Dadurch kann beim Siebvorgang, insbesondere mit Verfahren des Raupenfahrzeugs, zugleich ein Graben wieder gefüllt werden, vorzugsweise mit dem feinen Material. Auch ermöglicht die Verdrehung der Arbeitseinheit die Anlage teilkreisförmiger Schüttkegel ohne Verfahren des Raupenfahrwerks.

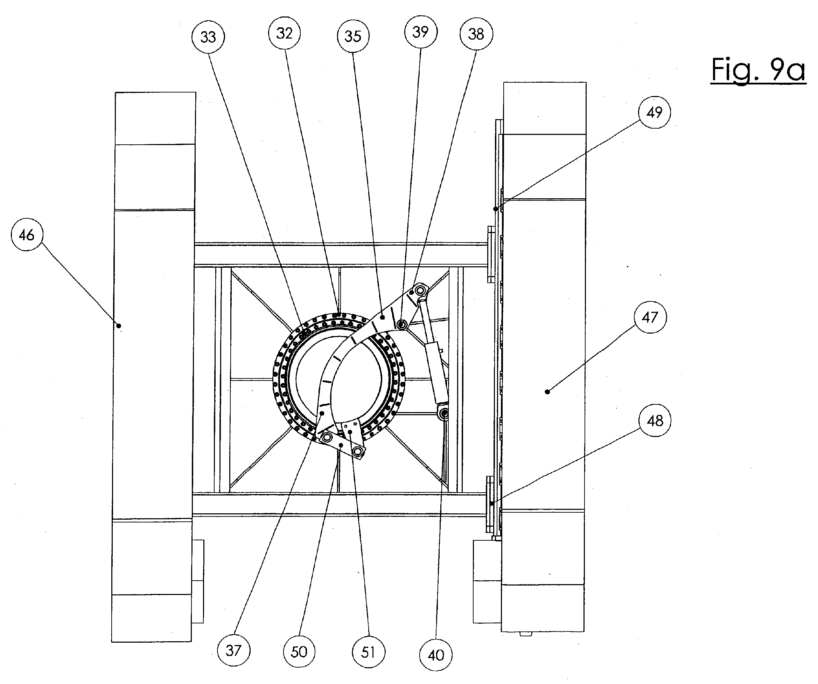

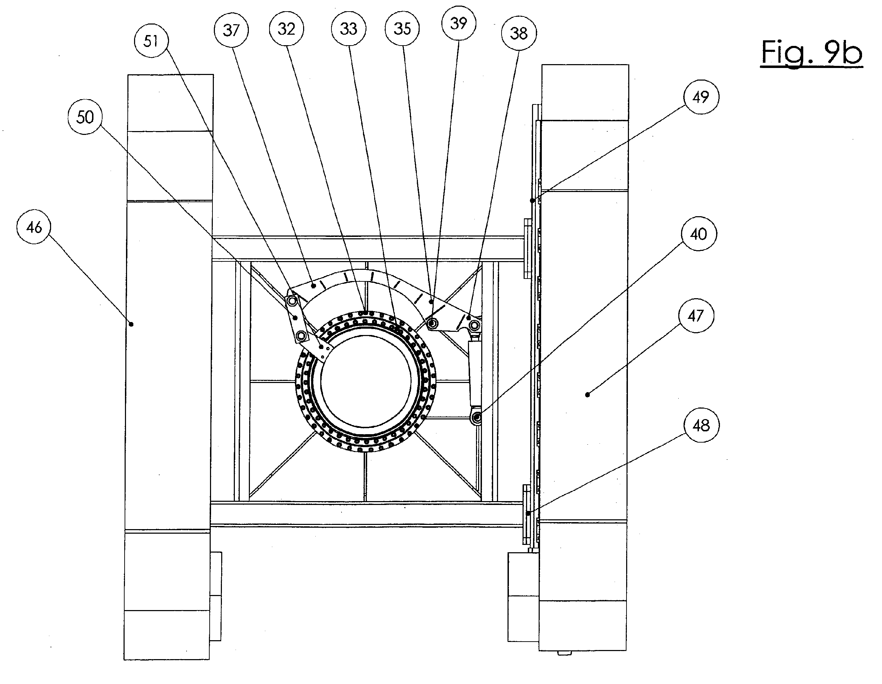

Die Fig. 9a und 9b zeigen in der Unteransicht verschiedene Stellungen des Drehlagers 11. Die Stellung gemäß Fig. 9a entspricht dabei der in Fig. 5 gezeigten Stellung. In der Darstellung der Fig. 9b ist der innere Lagerring 33 im Uhrzeigersinn um etwa 135° verdreht.

Das Drehlager 11 ist in eine Rahmenplatte 43 eingesetzt, die mit Querträgern 44, 45 (Fig. 5) verschweißt ist. Diese verbinden Raupenschiffe 46, 47 miteinander. Hierfür weisen die Raupenschiffe jeweils Anschlüsse 48, 49 auf.

Der Hebel 35 bzw. dessen langer Arm 37 ist nicht direkt mit dem Lagerring 33 verbunden. Vielmehr ist ein zusätzlicher kurzer Hebel 50 vorgesehen, der mit einem Ende an einem radialabstehenden Fortsatz 51 des Lagerrings 32 und mit einem anderen Ende am langen Arm 37 angelenkt ist. Durch diese Kombination der Hebel 35, 50, 51 und die in den Fig. dargestellte Anordnung derselben ist die bereits genannte Verdrehung der Arbeitseinheit 13 um etwa 135° möglich.

Die Lagerpunkte 39, 40 sind der Rahmenplatte 43 zugeordnet bzw. unter derselben angeordnet.

An Stelle des gezeigten Siebaggregats 16 können andere Arbeitsgeräte zum Sieben, Sortieren oder Zerkleinern von Material vorgesehen sein, beispielsweise eine Mühle, ein Brecher oder ein Schredder.

### Bezugszeichenliste:

- 10: Raupenfahrwerk
- 11: Drehlager
- 12: Neigungsregeleinheit
- 13: Arbeitseinheit
- 14: Steigförderer
- 15: Bunker
- 16: Siebaggregat
- 17: Rahmen
- 18: Gelenk
- 19: Lagerpunkt
- 20: Lagerpunkt
- 21: Hydraulikzylinder
- 22: Hydraulikzylinder
- 23: Lagerpunkt
- 24: Drehplatte
- 25: Hydraulikzylinder
- 26: Hydraulikzylinder
- 27: oberer Lagerpunkt
- 28: oberer Lagerpunkt
- 29: unterer Lagerpunkt
- 30: unterer Lagerpunkt
- 31: höchster Punkt
- 32: Lagerkranz
- 33: Lagerring
- 34: Sockel
- 35: Hebel
- 36: Hydraulikzylinder
- 37: langer Arm
- 38: kurzer Arm
- 39: Lagerpunkt
- 40: Lagerpunkt
- 41: Reihe
- 42: Reihe
- 43: Rahmenplatte
- 44: Querträger
- 45: Querträger
- 46: Raupenschiff
- 47: Raupenschiff
- 48: Anschluss
- 49: Anschluss
- 50: kurzer Hebel
- 51: Fortsatz

## Patentansprüche

1. Vorrichtung zum Sieben, Sortieren oder Zerkleinern von schüttfähigen Gütern, mit einem Raupenfahrwerk (10) und einer auf dem Raupenfahrwerk angeordneten Arbeitseinheit (13), insbesondere einem Steigförderer (14) mit nachgeordnetem Arbeitsgerät, **dadurch gekennzeichnet, dass** die Arbeitseinheit (13) in ihrer Neigung relativ zum Raupenfahrwerk (10) verstellbar ist.

2. Vorrichtung nach Anspruch 1, **dadurch gekennzeichnet, dass** der Steigförderer (14) in seiner Neigung quer zu seiner Förderrichtung verstellbar ist.

3. Vorrichtung nach Anspruch 1 oder 2, **dadurch gekennzeichnet, dass** die Neigung der Arbeitseinheit (13) relativ zum Raupenfahrwerk (10) in beliebige Richtungen verstellbar ist.

4. Vorrichtung nach Anspruch 1 oder einem der weiteren Ansprüche, **dadurch gekennzeichnet, dass** der Steigförderer (14) an einem Rahmen (17) gehalten und dieser in seiner Neigung relativ zum Raupenfahrwerk (10) verstellbar ist.

5. Vorrichtung nach Anspruch 1 oder einem der weiteren Ansprüche, **dadurch gekennzeichnet, dass** das Arbeitsgerät an einem Rahmen (17) gehalten ist, der auch den Steigförderer (14) hält.

6. Vorrichtung nach Anspruch 1 oder einem der weiteren Ansprüche, **dadurch gekennzeichnet, dass** als Arbeitsgerät ein Siebaggregat (16) vorgesehen ist.

7. Vorrichtung nach Anspruch 1 oder einem der weiteren Ansprüche, **dadurch gekennzeichnet, dass** dem Steigförderer (14) ein Bunker (15) vorgeordnet ist.

8. Vorrichtung nach Anspruch 4 oder einem der weiteren Ansprüche, **dadurch gekennzeichnet, dass** der Rahmen (17) zumindest auf mehreren längenveränderlichen Stellorganen gehalten ist.

9. Vorrichtung nach Anspruch 8, **dadurch gekennzeichnet, dass** der Rahmen (17) auf dem Raupenfahrwerk (10) an einem Gelenk (18) und mehreren längenveränderlichen Stellorganen gehalten ist.

10. Vorrichtung nach Anspruch 1 oder einem der weiteren Ansprüche, **dadurch gekennzeichnet, dass** der Rahmen (17) an drei oder mehr Lagern gehalten ist.

11. Vorrichtung nach Anspruch 1 oder einem der weiteren Ansprüche, **dadurch gekennzeichnet, dass** die Arbeitseinheit (13) bzw. der Steigförderer (14) relativ zum Raupenfahrwerk (10) drehbar angeordnet ist.

12. Vorrichtung nach Anspruch 1 oder einem der weiteren Ansprüche, **dadurch gekennzeichnet, dass** das Arbeitsgerät in seiner Neigung relativ zum Steigförderer (14) abwinkelbar ist.
